# EUROPEAN PATENT APPLICATION

(11) **EP 2 662 603 A1**
(43) Date of publication of application: **13.11.2013**
(21) Application number: 12382174.6
(22) Date of filing: 11.05.2012
(51) Int. Cl.: F16L 9/133

(54) **Non-metallic pipe or conduit with early detection means for detecting failures, detection system and method**

(71) Applicant: Schurman Pastorino, Maximiliano, 30203 Cartagena (Murcia) (ES)
(72) Inventor: Schurman Pastorino, Maximiliano, 30203 Cartagena (Murcia) (ES)
(74) Representative: Mato Adrover, Ángel Luis

(57) **Abstract**

The present invention relates to a pipe or conduit which has a metallic element inside its structure running along the length of the pipe; the pipe can be formed by one or several layers, the metallic element (4) will preferably be a metal filament or wire, and will run describing a helix, such that having measured the electric constants in the start-up of the pipe, said electric constants are subsequently measured such that if there is any variation it is because the material housing the metallic element has begun to crack, to deform or to erode, which allows anticipating a possible subsequent breakdown of greater economic and environmental consequences.

## Description

### Object of the Invention

As indicated by the title of the invention, an object of the present invention is a non-metallic pipe or conduit with early detection means for detecting failures, as well as both the detection system and the method necessary to detect failures.

The present invention is characterized by the constructive features of the pipe or conduit object of the invention, which are such that it allows the early detection of structural or constructive changes in the conduits or pipes, particularly the thickness or its constitutive structure, such that they help to anticipate and prevent future failures.

The present invention is therefore within the field of non-metallic conduits or pipes and also in the field of detection means for detecting structural changes of said pipes.

### Background of the Invention

Conduction systems for liquids, mixtures of liquids with solids or gases with solids in suspension are designed to operate for a long time without requiring too much maintenance, in pipe systems in which the pipes are manufactured in steel or another metallic material, the early detection of problems can be carried out by means of known control methods which are carried out with standard equipment; in contrast, in pipe systems manufactured with plastics, acrylics, glazing or a combination of fibres and resins or concrete, the condition of the pipe system cannot be evaluated by conventional methods in all cases.

Particularly in pipe systems such as concrete pipes with or without reinforcement or covering, plastic reinforced glass fibre pipes (glass reinforced plastic GRP or fibre reinforced plastic FRP), the condition of the pipes can only be evaluated when they are empty or by means of extracting samples in presumably compromised locations; the analysis of the samples is compared with thickness standards, thus determining the remaining service life.

Knowing when a pipe system is reaching the end of its service life, but not having any type of failure or leak therein, is very important for users of reinforced plastic pipes in systems for transporting highly polluting or extremely hazardous liquids or mixtures of liquids and solids, such as petroleum or inflammable liquids, from the economic as well as environmental point of view, and also for the operation of the company as well as for the social responsibility and reputation thereof.

There is an endless list of accidents related with the rupture of non-metallic pipes, and this type of accident is usually not preceded by any type of prior warning or warning of an imminent failure.

An object of the present invention is to therefore design a non-metallic pipe or conduit which overcomes the indicated difficulties of a lack of information concerning the condition of the pipe which would help, knowing the condition of the pipe, to prevent a number of accidents having very important economic and environmental consequences, developing a pipe such as that described below and the essential nature of which is described in claim 1.

### Description of the Invention

The object of the invention is a pipe which is designed such that it allows knowing the condition of pipes.

The fundamental objective of this invention is to indicate the end of the service life of some of the different layers of material of the pipe to the user of such pipe before it reaches the failure or destruction condition.

The means used for designing the pipe or conduits which allow having information concerning the condition of pipes, particularly of some of the layers of the pipe, is by means of inserting a metallic element which is preferably, but not in a limiting manner, a metal filament or wire arranged inside the structure of the pipe, which could be formed by a plurality of layers forming a pipe or conduit.

The wire or filament can either be arranged between two consecutive layers or in the material of the at least single layer forming part of the pipe.

The diameter of the filament or wire will have a section such that it does not affect the mechanical characteristics of the pipe due to the structural characteristics of the wire, the thickness of the layers or the diameter of the pipe.

The filament introduced inside the structure of the pipe or conduit must have much lower breaking strength and friction resistance values than the materials forming the pipe in which it is incorporated.

Even though the use of a metal filament or wire as means for supplying information about the condition of the pipe has been mentioned, any another metallic means inserted in the structure which does not necessarily have to be in the form of a filament or wire could be used, possibly being a metal band or flexible flat bar.

The ends of the metal filament or wire will be located in an accessible location, preferably on the outer surface of the pipe, for the purpose of providing the monitoring system in a simple and safe manner. The ends of the metal filament or wire will have an electrode preferably made of copper or stainless steel or another conductive metal which adapts to the use that will be made of the pipe.

When referring to a conduit or pipe, the concept extends to all pipe accessories such as bends, T-shaped connections, bypasses, reducers, flanges, etc.

The metal filament or wire serve as a basis for indicating the condition of at least one of the layers forming the pipe is inserted during the pipe manufacturing process, being able to be inserted during the pipe rolling process.

In terms of the detection method for detecting the condition of the pipes constructed with the indicator means, it comprises the steps of:
- Measuring the electric characteristics of the metal filament or wire as soon as the pipe starts to operate. The electric characteristics will be determined by its length, thickness and specific resistivity.

- Either sporadically or regularly every so often measuring the electric constants again.
- Comparing both values and if there is a difference, it is because the pipe has begun to crack, deteriorate or the inner protective layer has lost its thickness, for which reason the electric constants of the inner filament or wire have varied.

Different detection systems for detecting changes of the electric constants (among others, resistance) which can either be portable or even left permanently connected exist on the market today.

An early detection system in non-metallic pipes manufactured with the indicated detection means would include control means and signalling or alarm means in addition to measuring means for measuring the electric constants of the metal filament or wire.

### Description of the Drawings

To complement the description being made and for the purpose of aiding to better understand the features of the invention according to a preferred practical embodiment thereof, a set of drawings is attached as an integral part of said description in which the following has been depicted with an illustrative and non-limiting character:.
Figure 1 shows a cross-section of a non-metallic pipe or conduit in which the different constitutive layers as well as the metal filament used to detect failures or premature deterioration can be seen.
Figure 2 shows the arrangement of the metal filament or wire around the pipe or conduit.

### Preferred Embodiment of the Invention

A preferred embodiment of the proposed invention is described below in view of the drawings.

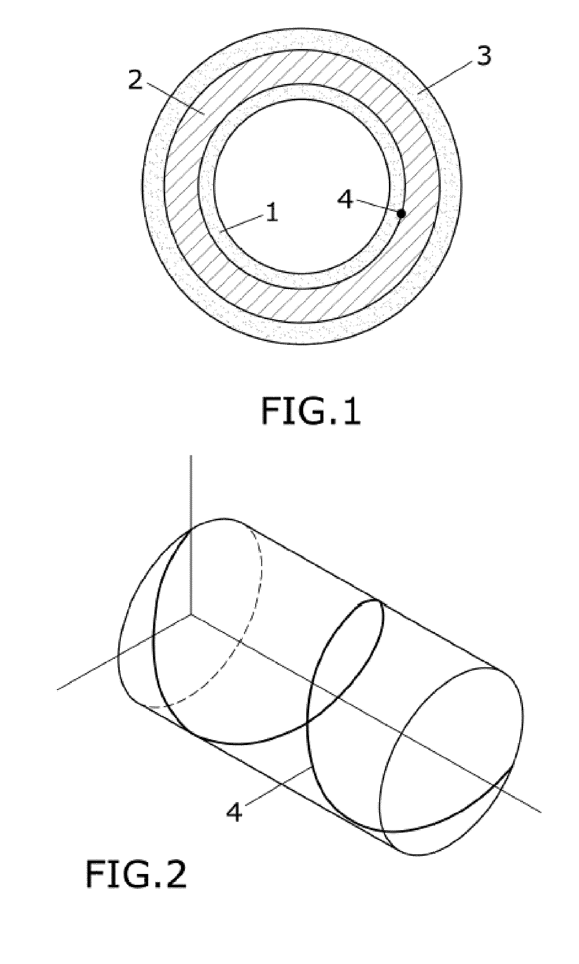

Figure 1 shows the cross-section of a pipe, in which it can be seen that it is formed by several layers. Non-metallic pipes are generally formed by several concentrically arranged layers. Figure 1 depicts several layers, but the pipe does not have to be formed by a minimum number of layers, possibly being manufactured with a single material.

In the embodiment shown, a resin-enriched lining or inner layer (1), an intermediate wall (2) and an outer cover (3), having a metallic element or means (4) running along the length of the pipe or conduit inside the structure itself, either between the layers in the case of having several layers, or embedded in one of the layers, is observed. In the depicted case, the conductive element (4) is in the inner layer (1).

The conductive element (4), which can be in the form of a filament or wire, has connection terminals generally arranged at its ends and on the outer surface of the pipe to be monitored, in order to have easy and safe access, possibly being manufactured in copper or stainless steel.

Figure 2 shows a possible preferred but non-limiting embodiment of the conductive filament or wire (4) having a helical shape which in a possible embodiment would have in the order of 2 turns every 10 mm of length, thereby covering in a simple manner a large part of the surface susceptible to deterioration. The number of turns or the pitch of the helix described by the conductive element (4) is determined by the diameter of the pipe and the feasibility of its installation by the pipe manufacturer.

As a result of the design of pipes or conduits manufactured as described and the detection method for detecting the variation of the electric constants of the pipes, virtually all faults appearing in non-metallic pipes are covered, being able to be detected with a sufficient time margin so that the end user undertakes the repairs in time and according to the operating system of the plant or system, thereby preventing possible accidents and/or leaks.

Having sufficiently described the nature of the present invention as well as the way of putting it into practice, it is hereby stated that, within its essential nature, it can be put into practice in other embodiments differing in detail from that indicated by way of example and these will be equally covered by the protection sought provided that the fundamental principle is not altered, changed or modified.

## Claims

1. A non-metallic pipe or conduit **characterised in that** it comprises a conductive element (4) inside the pipe itself spanning the length of the pipe or conduit.

2. The non-metallic pipe or conduit according to claim 1, **characterised in that** the metallic element (4) is in the form of a filament or wire.

3. The non-metallic pipe or conduit according to claim 1 or 2, **characterised in that** the metallic element (4) runs through the pipe describing a helix.

4. The non-metallic pipe or conduit according to any of the preceding claims, **characterised in that** the conductive element (4) has connection terminals at its ends accessible from outside the pipe.

5. The non-metallic pipe or conduit according to any of the preceding claims, **characterised in that** the conductive element is housed between two consecutive layers of the pipe or conduit.

6. The non-metallic pipe or conduit according to any of the preceding claims, **characterised in that** the conductive element is embedded in the material forming the pipe or conduit.

7. An early detection system in metallic pipes or conduits with the features claimed above, **characterised in that** it comprises:
- measuring means for measuring the electric constants of the metallic element (4) inserted in the pipe, and,
- control means
- signalling or alarm means

8. An early detection method for detecting failures in non-metallic pipes or conduits, **characterised in that** it comprises the steps of:
- Measuring the electric characteristics of the metallic element as soon as the pipe starts to operate
- Either sporadically or regularly every so often measuring the electric constants again
- Comparing both values and if there is a difference, it is because the pipe has begun to crack, deteriorate or the inner protective layer has lost its thickness
